Europäisches Patentamt

European Patent Office

Office européen des brevets

(11) Veröffentlichungsnummer: **0 340 798**
**A1**

## (12) EUROPÄISCHE PATENTANMELDUNG

(21) Anmeldenummer: 89108192.9

(51) Int. Cl.4: **F16K 11/02**

(22) Anmeldetag: 05.05.89

(30) Priorität: 05.05.88 DE 3815396

(43) Veröffentlichungstag der Anmeldung:
08.11.89 Patentblatt 89/45

(84) Benannte Vertragsstaaten:
ES

(71) Anmelder: Straub, Hartwig
Gänsäckerstrasse
D-6965 Ahorn-Berolzheim(DE)

(72) Erfinder: Straub, Hartwig
Gänsäckerstrasse
D-6965 Ahorn-Berolzheim(DE)

(74) Vertreter: Bardehle, Heinz, Dipl.-Ing. et al
Patent- und Rechtsanwälte
Bardehle-Pagenberg-Dost-Altenburg-Frohwitter-Geissler & Partner Postfach 86 06 20
D-8000 München 86(DE)

(54) 3-Wege-Ventil.

(57) 3-Wege-Ventil mit einem Ventilkörper zur Steuerung eines Durchflusses und eines Gegenstroms. Für den Durchfluß ist im Ventilkörper eine zylindrische Bohrung vorgesehen in die ein Durchbruch radial einmündet, wobei Bohrung und Durchbruch den Durchfluß führen, und koaxial in die Bohrung ein abgeschlossenes Rohr mit einem Anschluß für den Gegenstrom ragt, dessen Wandung für den Durchtritt des Gegenstroms mindestens eine Öffnung aufweist und auf das eine elastische, die Öffnung abdichtende Manschette aufgezogen ist, wobei zwischen der Manschette und der Wandung der Bohrung ein Ringspalt besteht, durch den der Durchfluß geleitet wird, und bei Einleitung des Gegenstroms die Manschette zwecks Abdichtung des Durchbruchs aufgeweitet wird und dabei den Gegenstrom aus der Öffnung in die Bohrung leitet.

Fig. 1

EP 0 340 798 A1

Xerox Copy Centre

## 3-Wege-Ventil

Die Erfindung bezieht sich auf 3-Wege-Ventil mit einem Ventilkörper zur Steuerung eines Durchflusses und eines Gegenstromes. Ein solches 3-Wege-Ventil kann z. B. dazu verwendet werden, einen Durchfluß in dem Sinne zu steuern, daß dieser entweder durchgeleitet oder abgesperrt wird, wobei im Falle des Absperrens des Durchflusses ein Gegenstrom durch den Ventilkörper geleitet wird. Ein solcher Gegenstrom kann beispielsweise dazu dienen, eine Zuführungsleitung zu dem Ventilkörper zu reinigen.

Erfindungsgemäß ist das 3-Wege-Ventil dadurch gekennzeichnet, daß für den Durchfluß im Ventilkörper eine zylindrische Bohrung vorgesehen ist, in die ein Durchbruch radial einmündet, wobei Bohrung und Durchbruch den Durchfluß führen, und koaxial in die Bohrung ein abgeschlossenes Rohr mit einem Anschluß für den gegenstrom ragt, dessen Wandung für den Durchtritt des Gegenstroms mindestens eine Öffnung aufweist und auf das eine elastische, die Öffnung abdichtende Manschette aufgezogen ist, wobei zwischen der Manschette und der Wandung der Bohrung ein Ringspalt besteht, durch den der Durchfluß geleitet wird, und bei Einleitung des Gegenstroms die Manschette zwecks Abdichtung des Durchbruchs aufgeweitet wird und dabei den Gegenstrom aus der Öffnung in die Bohrung leitet.

Bei diesem 3-Wege Ventil ergibt sich bei Einleitung des Gegenstroms eine Absperrung des Durchflusses, da sich in diesem Falle die Manschette aufweitet und den Durchbruch abdichtet, über den bei am Rohr anliegender Manschette der Durchfluß geleitet wird. Die aufgeweitete Manschette läßt dann den Gegenstrom aus dem Rohr über die Öffnung und aus dieser in die Bohrung, in der dann der Gegenstrom verläuft. Es kommt dabei auf die Stromrichtung des Durchflusses nicht an. Um jedoch den Gegenstrom als solchen auzunutzen, ist es zweckmäßig, den Durchfluß in einer derartigen Richtung zu leiten, daß dieser aus der Bohrung in den Durchbruch geführt wird. Bei dem Durchfluß kann es sich auch um einen anstehenden, zu messenden Druck, insbesondere einen Luftdruck handeln.

Im Sinne einer möglichst gleichmäßigen Aufweitung der Manschette bei Einleitung des Gegenstroms gestaltet man die Wandung des Rohres zweckmäßig derart, daß in dieser zwei gegenüber liegende Öffnungen vorgesehen sind und im Bereich der Öffnungen in die Rohrwandung eine Ringnut eingelassen ist. Wenn dann in das Rohr der Gegenstrom eingeleitet wird, ergibt sich im Bereich der beiden Öffnungen und der über die Öffnungen verlaufenden Ringnut ein sich um das Rohr insgesamt ausbreitender radialer Druckstoß, der die Manschette gleichmäßig aufweitet und diese an die Wandung der Bohrung anlegt. Aufgrund der gleichmäßigen Aufweitung der Manschette legt diese sich also ringartig vollständig an die Wandung der Bohrung an, so daß es keine Rolle spielt, an welcher Stelle in die Bohrung der Durchbruch einmündet. Der Durchbruch wird also mit Sicherheit durch die aufgeweitete Manschette abgedichtet, so daß der Gegenstrom aus der Öffnung in die Bohrung geleitet wird, aus der dann der Gegenstrom in eine angeschlossene Zuleitung gelangt und in dieser die gewünschte Wirkung entfaltet.

In den Figuren ist ein Ausführungsbeispiel der Erfindungen dargestellt. Es zeigen:

Figur 1 eine Schnittzeichnung des 3-Wege-Ventils mit durchgeleitetem Durchfluß,

Figur 2 das gleiche 3-Wege-Ventil mit durch den Gegenstrom aufgeweiteter Manschette und Zuleitung des Gegenstroms zu der Bohrung.

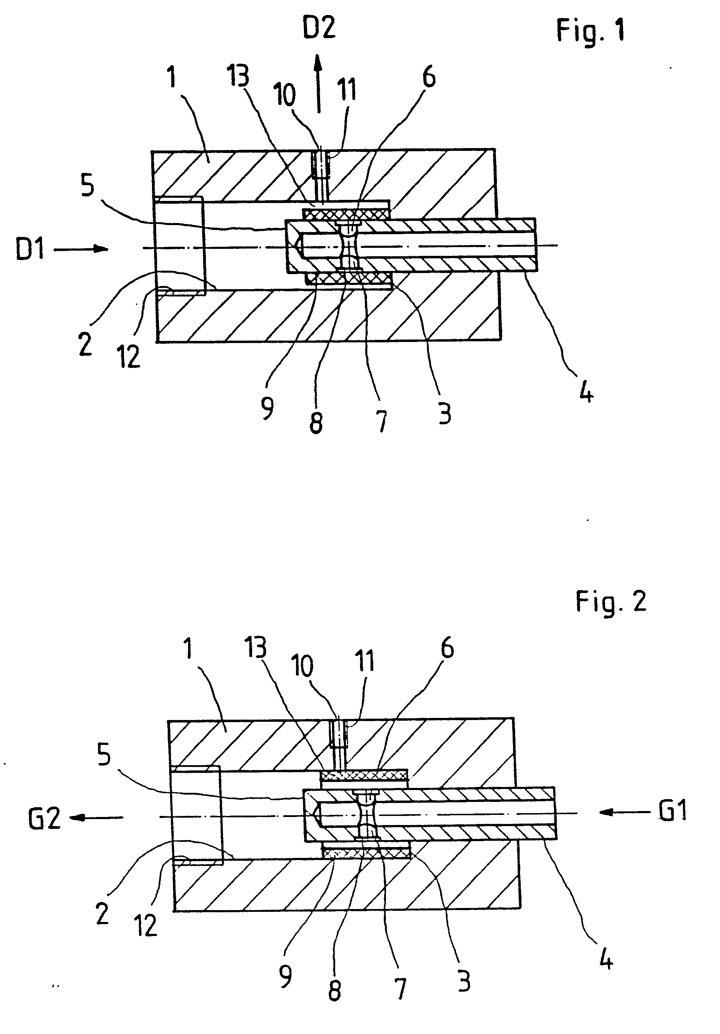

Das in der Figur 1 dargestellte 3-Wege-Ventil besteht aus dem Ventilkörper 1, in das die zylindrische Bohrung 2 eingelassen ist. Die Bohrung 2 endet in der Schulter 3, die von dem in den Ventilkörper koaxial dichtend eingesetzten Rohr 4 durchbrochen wird. Das Rohr 4 ist innerhalb der Bohrung 2 durch den Boden 5 abgeschlossen. Es weist die beiden gegenüberliegenden Öffnungen 6 und 7 auf, die durch eine das Rohr 4 radial durchsetzende Durchgangsbohrung entstanden sind. Im Bereich der beiden Öffnungen 6 und 7 ist in die Wandung des Rohres 4 die Ringnut 8 eingelassen. Auf das Rohr 4 ist in seinem Bereich, in dem dieses in die Bohrung 2 hineinragt, die aus elastischem Material bestehende Manschette 9 aufgezogen, die das Rohr 4 umspannt und damit die beiden Öffnungen 6 und 7 abdichtet. Die am Rohr 4 anliegende Manschette läßt gegenüber der Wandung der Bohrung 2 den Ringspalt 13 offen. In den Ventilkörper 1 ist schließlich der Durchbruch 10 eingelassen. Der Durchbruch 10 besitzt nach außen hin das Innengewinde 11, in das irgendeine Zuleitung eingeschraubt werden kann. In gleicher Weise ist in den Ventilkörper 1 im Bereich der Bohrung 2 das Innengewinde 12 eingeschnitten, das ebenfalls für das Anschrauben irgendeiner Zuleitung dient. Das Rohr 4 ragt aus dem Ventilkörper 1 heraus, so daß an dieser Stelle z. B. ein Schlauch aufgeschoben werden kann.

Bei am Rohr 4 anliegender Manschette 9, wie in Figur 1 dargestellt, besteht über dem Ringspalt 13 eine durchgehende Verbindung zwischen der Bohrung 2 und dem Durchbruch 10, sodaß z. B. gemäß den eingezeichneten Pfeilen D 1 und D 2 ein Durchfluß durch den Ventilkörper 1 hindurch geleitet werden kann. Wie bereits oben erwähnt, kann der Durchfluß auch in umgekehrter Richtung verlaufen.Es ist auch möglich, über die Verbindung von Bohrung 2 und Durchbruch 10 einen anstehenden Luftdruck zu führen. Der Durchfluß D1 - D2 hat dabei keinen Zutritt zu dem Rohr 4, da dessen Öffnungen 6 und 7 durch die anliegende Manschette 9 abgedichtet werden.

In Figur 2 ist dargestellt, wie sich ein dem Rohr 4 zugeleiteter Gegenstrom auswirkt. Der Gegenstrom gelangt gemäß Pfeil G1 in das Rohr 4 und damit über die beiden Öffnungen 6 und 7 in die Ringnut 8. Aufgrund des Druckes des Gegenstroms G1 wird die Manschette 9 aufgeweitet, wobei sie sich über ihren ganzen Umfang an die Wandung der zylindrischen Bohrung 2 anlegt und damit den Durchbruch 10 von innen her abdichtet. Durch das Abheben der Manschette 9 vom Rohr 4 gibt die Manschette 9 die Ringnut 8 in Richtung auf die Bohrung 2 frei, sodaß der Gegenstrom G1 unter der abgehobenen Manschette 9 hervortreten und in die Bohrung 2 eintreten kann. Der Gegenstrom tritt dann aus der Bohrung 2 als Strom G2 aus. Er kann dann in einer an die Bohrung 2 angeschlossenen Zuleitung einen gewünschten Effekt, z. B. eine Reinigungswirkung entfalten.

## Ansprüche

1. 3-Wege-Ventil mit einem Ventilkörper zur Steuerung eines Durchflusses und eines Gegenstroms, dadurch gekennzeichnet, daß für den Durchfluß (D1, D2) im Ventilkörper (1) eine zylindrische Bohrung (2) vorgesehen ist, in die ein Durchbruch (10) radial einmündet, wobei Bohrung (2) und Durchbruch (10) den Durchfluß (D1, D2) führen, und koaxial in die Bohrung (2) ein abgeschlossenes Rohr (4) mit einem Anschluß für den Gegenstrom (G1, G2) ragt, dessen Wandung für den Durchtritt des Gegenstroms (G1, G2) mindestens eine Öffnung (6, 7) aufweist und auf das eine elastische, die Öffnung (6, 7) abdichtende Manschette (9) aufgezogen ist, wobei zwischen der Manschette (9) und der Wandung der Bohrung (2) ein Ringspalt (13) besteht, durch den der Durchfluß (D1, D2) geleitet wird, und bei Einleitung des Gegenstroms (G1, G2) die Manschette (9) zwecks Abdichtung des Durchbruchs (10) aufgeweitet wird und dabei den Gegenstrom (G1, G2) aus der Öffnung (6, 7) in die Bohrung (2) leitet.

2. 3-Wege- Ventil nach Anspruch 1, dadurch gekennzeichnet, daß in der Wandung des Rohres (4) zwei gegenüber liegende Öffnungen (6, 7) vorgesehen sind und im Bereich der Öffnungen (6, 7) in die Rohrwandung (4) ein Ringnut (8) eingelassen ist.

3

STRAUB, Hartwig
St 8971 EP

05.05.1989

D2

Fig. 1

1    13    10    11    6

5

D1 →

2    12    9    8    7    3    4

Fig. 2

1    13    10    11    6

5

G2 ←    → G1

2    12    9    8    7    3    4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 680 582 (PAULIUKONIS) <br> * Anspüche 1-5; Figuren 1-2 * <br> --- | 1,2 | F 16 K 11/02 |
| A | FR-A-2 052 234 (RENOU) <br> * Ansprüche 1,2; Figur 1 * <br> ----- | 2 | |

RECHERCHIERTE SACHGEBIETE (Int. Cl.4)

F 16 K
F 04 B
A 61 M

Der vorliegende Recherchenbericht wurde für alle Patentansprüche erstellt

| Recherchenort | Abschlußdatum der Recherche | Prüfer |
|---|---|---|
| DEN HAAG | 19-06-1989 | FONSECA Y FERNANDEZ H. |

EPO FORM 1503 03.82 (P0403)